# EUROPÄISCHE PATENTSCHRIFT

(11) **EP 1 622 694 B1**
(45) Veröffentlichungstag und Bekanntmachung des Hinweises auf die Patenterteilung: **06.12.2006**
(21) Anmeldenummer: 03750441.2
(22) Anmeldetag: 26.08.2003
(51) Int. Cl.: B01D 25/12, B01D 35/143, G01F 1/20, G01F 1/28

(54) **LECKAGE-ANZEIGE FÜR EIN FILTERELEMENT EINER FILTERPRESSE**
LEAKAGE INDICATOR FOR A FILTER ELEMENT OF A FILTER PRESS
INDICATEUR DE FUITE CONCU POUR UN ELEMENT DE FILTRAGE D'UN FILTRE-PRESSE

(30) Priorität: 19.05.2003 DE 20307912 U
(43) Veröffentlichungstag der Anmeldung: 08.02.2006
(73) Patentinhaber: JVK Filtration Systems GmbH, 91166 Georgensgmünd (DE)
(72) Erfinder: KIESSLING, Holger, 91187 Röttenbach (DE); HERMANN, Manfred, 90491 Nürnberg (DE)
(74) Vertreter: Tergau & Pohl Patentanwälte
(86) Internationale Anmeldenummer: PCT/EP2003/009423
(87) Internationale Veröffentlichungsnummer: WO 2004/101104

(56) Entgegenhaltungen:
- EP-A- 0 692 701
- EP-A- 1 084 742
- WO-A-02/41777
- CH-A- 345 778
- DE-A- 2 214 701
- DE-A- 3 635 098
- DE-A- 3 833 145
- FR-A- 2 818 372
- GB-A- 900 340
- GB-A- 1 525 382

## Beschreibung

Die Erfindung betrifft einen Leckageanzeiger für ein Filterelement einer Filterpresse, gemäß dem Oberbegriff des Anspruchs 1.

Filterpressen mit Membran-Filterelementen werden auch als Membranfilterpressen bezeichnet und sind aus dem Stand der Technik, beispielsweise aus der deutschen Patentschrift DE 44 15 274 C2, bekannt. Bei derartigen Filterpressen findet im Anschluss an die übliche Druckfiltration ein Nachpressen, die sogenannte Pressfiltration statt. Dabei wird der in der Filterkammer aufgebaute Filterkuchen von der noch vorhandenen Restflüssigkeit befreit. Hierzu weist das zumeist plattenförmige Filterelement wenigstens eine Membran auf, so dass zwischen Filterplatte und Membran ein druckdichter Pressraum entsteht. Zum Auspressen wird dieser Druckraum mit einem Druckmittel beaufschlagt und somit die Membran aufgebläht. Das Druckmittel wird dabei zumeist durch eine im Rand des Filterelementes befindliche Bohrung zu- bzw. abgeführt.

Tritt an einer Membran oder an deren Befestigung ein Defekt auf, gelangt das Druckmittel in den Filterkuchenraum, der auch als Filterkammer bezeichnet wird, und verlässt die Filterpresse zusammen mit dem Filtrat unbemerkt. Bei größeren Leckagen wird zwar ein Druckmittelverlust festgestellt. Jedoch ist die Ermittlung der defekten Membranplatte im Plattenpaket immer dann sehr schwierig und zeitaufwendig, wenn die Filterpresse eine große Anzahl von Filterelementen aufweist.

Aus der europäischen Patentanmeldung EP 1 084 742 A1 ist ein Leckagemelder für Filterelemente einer Filterpresse bekannt, bei dem zur Lokalisierung derartiger Leckagen ein Strömungssensor mit einem Laufrad in eine entsprechende Anschlussbohrung eingesetzt wird, wobei das Laufrad durch das zu- bzw. abströmende Druckmittel in eine Drehbewegung versetzt wird, welche visuell überwacht werden kann. Nachteilig bei dieser Lösung ist, dass an die Anordnung der erforderlichen Strömungsöffnungen und deren Winkelstellungen besondere Anforderungen gestellt werden, um Stauungen des Druckmittels zu vermeiden und einen ausreichenden Antrieb des Laufrades zu gewährleisten.

Aus der DE-A-36 35 098 einerseits und der DE-A-22 14 701 andererseits ist jeweils ein Strömungsmesser mit frei beweglich angeordnetem Anzeigekörper bekannt. Diese Strömungsmesser sind geeignet, einen gewünschten Volumenstrombereich abzudecken. Sie eignen sich deshalb auch als Leckageanzeiger für ein Filterelement einer Filterpresse. Nachteilig an diesen bekannten Strömungsmessern ist ihre sperrige Baugröße.

Aufgabe der vorliegenden Erfindung ist es, einen Leckageanzeiger zu schaffen, der besonders einfach aufgebaut ist. Diese Aufgabe wird durch einen Leckageanzeiger mit den Merkmalen des Anspruchs 1 gelöst. Danach weist der Leckageanzeiger einen Anzeigekörper auf, der in einem Strömungsraum frei bewegbar angeordnet ist. Die von dem zu- oder abströmenden Druckmittel verursachte Lageänderung des Anzeigekörpers kann wiederum visuell oder durch Sensoren überwacht werden. Um einen sehr großen Volumenstrom des Druckmittels bewältigen zu können, ist der Querschnitt der endseitigen Abschnitte des Strömungsraumes größer als der Querschnitt des dazwischenliegenden Mittelteils des Strömungsraumes.

Die Erfindung basiert im Wesentlichen darauf, dass beim Auspressen in einem intakten Pressmertibran-Filterelements der Druckmittelstrom beim Erreichen des maximalen Auspressdruckes zum Stillstand kommt, da sich die Pressmembran am Filterkuchen anlegt und sich der Pressraum nicht mehr vergrößert. Während es also beim Befüllen bzw. Entleeren des Pressraumes zu einer Lageänderung des Anzeigekörpers durch das strömende Druckmittel kommt, verbleibt der Anzeigekörper ohne eine solche Strömung in einer Ruheposition. Tritt nun an der Membran eine Leckage auf, so fließt das Druckmittel in die Filterkammer und verlässt diese gemeinsam mit dem Filtrat. Der so entstehende Druckmittelstrom lenkt den Anzeigekörper aus seiner Ruheposition aus. Diese Lageänderung kann überwacht werden und dient damit sowohl der Anzeige eines Druckmittelverlustes, als auch der Lokalisierung des defekten Membran-Filterelementes. Insbesondere der letzte Punkt ist dann von großer Bedeutung, wenn die Filterpresse eine Vielzahl von Filterelementen aufweist.

Durch die Verwendung eines im Strömungsraum frei bewegbar angeordneten Anzeigekörpers erfolgt eine wesentliche konstruktive Vereinfachung im Hinblick auf die aus dem Stand der Technik bekannten Lösungen. Zum einen entfallen nämlich sämtliche Bauteile, die zur Befestigung des Leckagemelders (Laufrad etc.) dienen. Zum anderen kann der Strömungsraum sehr klein dimensioniert sein, da er nun lediglich den frei bewegbaren Anzeigekörper aufnehmen muss. Hierdurch wird der zur Montage des Leckageanzeigers benötigte Bauraum verringert.

Vorteilhafte Weiterbildungen des Leckageanzeigers ergeben sich aus den Unteransprüchen.

Als für die vorliegende Aufgabe besonders gut geeignet hat sich ein kanalförmiger, also langgestreckter und verhältnismäßig eng begrenzter Strömungsraum erwiesen (Anspruch 2) der vorteilhafterweise jeweils endseitig eine Ein- bzw. Auslassöffnung für das Druckmittel aufweist (Anspruch 3). Mit anderen Worten tritt das Druckmittel während des Befüllens des Pressraumes durch die Einlassöffnung an dem einen Ende des Strömungsraumes ein, durchströmt durch den Strömungsraum vollständig und tritt am gegenüberliegenden Ende des Strömungsraumes durch die Auslassöffnung in das Filterelement ein, um dort die Pressmembran zu beaufschlagen. Als Druckmittel wird vorzugsweise Druckluft oder, insbesondere zur Erzielung hoher Drücke oberhalb 6 bar, Wasser verwendet.

Der Mittelteil weist vorteilhafterweise einen Querschnitt auf, der dem Zuflussquerschnitt entspricht. Ist zudem der Anzeigekörper entsprechend dimensioniert (Anspruch 4), so ist ein störungsfreies Befüllen bzw. Entleeren des Pressraumes möglich. Stauungen des Druckmittels können somit wirksam vermieden werden.

In einer besonders vorteilhaften Ausführungsform der Erfindung gemäß Anspruch 5 ist der Strömungsraum bogenförmig ausgebildet. Vorzugsweise beschreibt der Strömungsraum einen fast vollständigen Kreis, insbesondere derart, dass sich Ein- und Auslassöffnung auf gleicher Höhe befinden. Bewegt sich der Anzeigekörper selbsttätig in eine Ruhelage, sobald keine Strömung des Druckmittels erfolgt (Anspruch 6), so wird durch diese Ruhelage eine Ausgangs- bzw. Nullposition definiert. Jedes Abweichen von dieser Ruhelage zeigt somit das Auftreten einer Druckmittelströmung, also einer Leckage im Fall eines bereits befüllten Filterelementes. Ist der Strömungsraum derart angeordnet, dass sich Ein- und Auslassöffnung oberhalb des Mittelteils befinden, fällt der Anzeigekörper quasi in den Mittelteil hinab und findet dort seine Ruheposition.

Verschließt der Anzeigekörper den Strömungsraum im Bereich seines Mittelteils, also in seiner Ruhelage, nahezu vollständig, erfolgt auch bei kleinsten Volumenströmungen des Druckmittels eine Lageänderung des Anzeigekörpers, so dass eine sehr hohe Empfindlichkeit des Leckageanzeigers erreicht werden kann.

Gleichzeitig ist für die Art und Weise der Anzeige die Biegung des Strömungsraumes von großer Bedeutung. Wird der Anzeigekörper aus seiner Ruhelage im Mittelteil des Strömungsraumes ausgelenkt, so muss zunächst seine Trägheit überwunden werden. Gleichzeitig wird bei einer Strömung des Druckmittels wegen der bogenförmigen Ausgestaltung des Strömungsraumes und insbesondere des Mittelteils der Anzeigekörper angehoben. Dieses Anheben erfolgt aufgrund der Zwangsführung im gebogenen Mittelteil auf einer Kreisbogenbahn, so dass die zur Auslenkung des Anzeigekörpers erforderliche Kraft des strömenden Druckmittels durch eine Komponente ergänzt wird, die durch eine Sinus-Funktion entsprechend des Kreisbogens charakterisiert ist. Hierdurch wird es möglich, sowohl sehr kleine, als auch sehr große Druckmittelströmungen auch mengenmäßig zu erfassen, im Gegensatz zu einem beispielsweise waagerecht verlaufenden, geraden Mittelteil, bei dem ein Anzeigekörper unter dem Einfluss des Druckmittels mit einem Mal vollständig in Richtung der Auslass- oder Einlassöffnung ausgelenkt würde und eine quantitative Auswertung der Auslenkung des Anzeigekörpers nicht möglich wäre.

Der Anzeigekörper ist vorzugsweise zylindrisch ausgebildet (Anspruch 8) und liegt vorzugsweise mit seinen Zylinderendflächen an den Seitenflächen des Strömungsraumes nahezu an, so dass der Strömungsraum eine Art Führung für den Anzeigekörper bildet. Beim Durchströmen des Druckmittels dient der Anzeigekörper sozusagen als Schwebekörper, während er sich beim. Wegfall der Druckmittelströmung nach Art eines Rollkörpers im Strömungsraum bewegt. Die Anzeigeempfindlichkeit des Anzeigekörpers kann dadurch variiert werden, dass der Anzeigekörper als Hohlzylinder und/oder aus Materialien unterschiedlicher Dichte, beispielsweise aus Metall, Kunststoff oder andere Werkstoffe, gefertigt ist. Anstelle eines zylindrischen Anzeigekörpers kann natürlich auch ein kugelförmiger Anzeigekörper oder ein Anzeigekörper mit einer anderen geometrischen Form verwendet werden.

Besonders vorteilhaft ist die Anordnung von Sperrelementen vor den Ein- bzw. Auslassöffnungen im Strömungsraum, die ein Blockieren dieser Öffnungen durch den Anzeigekörper verhindern (Anspruch 9).

Ist eine entsprechende Sichtscheibe als Abdeckung des Strömungsraumes vorgesehen (Anspruch 10), so kann das Auslenken des Anzeigekörpers aus einer Ruhelage von außen beobachtet werden. Die Erfassung der Lageänderung des Anzeigekörpers bzw. die Erfassung der Anzeigekörperposition kann selbstverständlich auch durch elektrische oder andere Sensoren erfolgen (Anspruch 11). Zugleich kann in diesem Fall eine auftretende Leckage durch entsprechende Anzeigehilfsmittel, beispielsweise optische Signalgeber, angezeigt werden.

Die im Strömungsraum angeordneten Ein- und Auslassöffnungen sind außerhalb des Strömungsraumes mit entsprechenden Zu- bzw. Ableitungen verbunden. Die Anordnung dieser Zu- bzw. Ableitungen am Leckageanzeiger ist frei und variabel wählbar, so dass der Leckageanzeiger sowohl vom Filterelement getrennt in der Druckmittelzuleitung, als auch direkt am Filterelement angebracht sein kann, wofür der Leckageanzeiger entsprechend ausgebildete Montageelemente aufweist (Anspruch 12).

Die Erfindung wird nachfolgend anhand eines Ausführungsbeispiels näher erläutert, welches anhand der Zeichnungen beschrieben wird. Hierbei zeigen:
- Fig. 1: eine Draufsicht auf einen erfindungsgemäßen Leckageanzeiger,
- Fig. 2: eine Schnittdarstellung des Leckageanzeigers entlang der Linie AA in Figur 1.

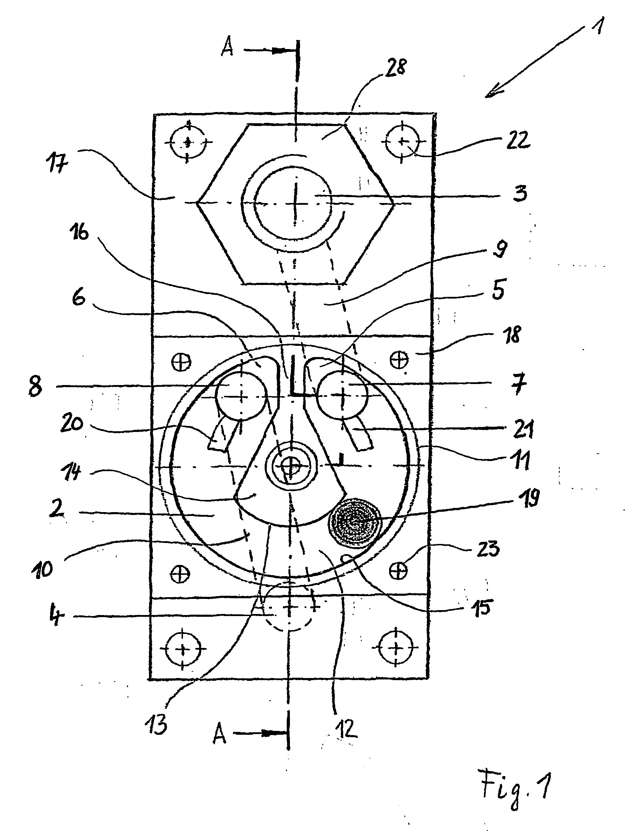

Fig. 1 zeigt den erfindungsgemäßen Leckageanzeiger 1 in Frontansicht. Der Leckageanzeiger 1 weist einen Strömungskanal 2 auf, der zwischen einer oberhalb des Strömungskanals 2 angeordneten Druckmittelzuleitung 3 und einer unterhalb des Strömungskanals 2 angeordneten Druckmittelableitung 4 angeordnet ist. Der Strömungskanal 2 ist bogenförmig ausgebildet, wobei in seinen endseitigen Abschnitten 5, 6 jeweils eine Öffnung angeordnet ist, die als Einlass- bzw. Auslassöffnung 7, 8 für das den Strömungskanal 2 durchströmende Druckmittel dient. Einlass- und Auslassöffnung 7, 8 sind mit der Druckmittelzuleitung 3 bzw. der Druckmittelableitung 4 jeweils durch Verbindungskanäle 9, 10 verbunden. Selbstverständlich ist es ebenfalls möglich, die Einlass- und Auslassöffnungen 7, 8 ohne Verbindungskanäle direkt mit der Druckmittelzuleitung 3 bzw. der Druckmittelableitung 4 zu verbinden, so dass der benötigte Einbau- bzw. Montageraum für den Leckageanzeiger 1 weiter verringert wird.

Der Strömungskanal 2 ist derart ausgebildet, dass er kreisbogenförmig in einer Rundöffnung 11 des Leckageanzeigers 1 ausgeformt ist. Dabei weisen die endseitigen Abschnitte 5, 6 des Strömungskanals 2 einen größeren Querschnitt auf als das zwischen diesen endseitigen Abschnitten 5, 6 liegende Mittelteil 12 des Strömungskanals 2. Das Mittelteil 12 wird zum einen durch die Stirnfläche 13 eines kreissegmentförmigen Trennelementes 14 und zum anderen durch den dieser Stirnfläche 13 gegenüberliegenden Rand 15 der Rundöffnung 11 begrenzt. Das Trennelement 14 ist in der Rundöffnung 11 in etwa mittig angeordnet und über einen Verbindungssteg 16 mit dem Rand 15 der Rundöffnung 11 verbunden. Es unterteilt die Rundöffnung 11 in zwei spiegelsymmetrisch zueinander angeordnete Strömungskanalhälften.

Zwischen dem Basisteil 17 des Leckageanzeigers 1, in dem die Rundöffnung 11 eingebracht ist und der die Rundöffnung 11 und damit den Strömungskanal 2 abschließenden vorderen Abdeckung 18 wird ein zylindrischer Anzeigekörper 19 geführt. Der Anzeigekörper 19 schließt den Strömungskanal 2 im Bereich seines Mittelteils 12 fast vollständig ab. Befindet sich der Anzeigekörper 19 im Bereich der endseitigen Abschnitte 5, 6 des Strömungskanals 2, so verhindern nockenförmige Sperrelemente 20, 21, die vor der Ein- bzw. Auslassöffnung 7, 8 angebracht sind, dass der Anzeigekörper 19 beim Befüllen bzw. Entleeren die Auslassöffnung 8 bzw. die Einlassöffnung 7 blockiert. In allen vier Ecken des Basisteils 17 sind Bohrlöcher 22 zur Ausbildung von Schraubverbindungen od. dgl. vorgesehen, die der Befestigung des Leckageanzeigers 1 am Filterelement (nicht abgebildet) dienen.

Die den Strömungskanal 2 nach vorn abschließende Abdeckung 18 ist vollständig als transparente Sichtscheibe ausgebildet, so dass eine Beobachtung der Lageänderung des Anzeigekörpers von außen möglich ist. Selbstverständlich ist es auch möglich, eine Abdeckung zu verwenden, die lediglich teilweise, nämlich im Bereich des Strömungskanals 2 transparent ist. Die Abdeckung 18 ist mit Schrauben 23 fest am Basisteil 17 des Leckageanzeigers 1 befestigt.

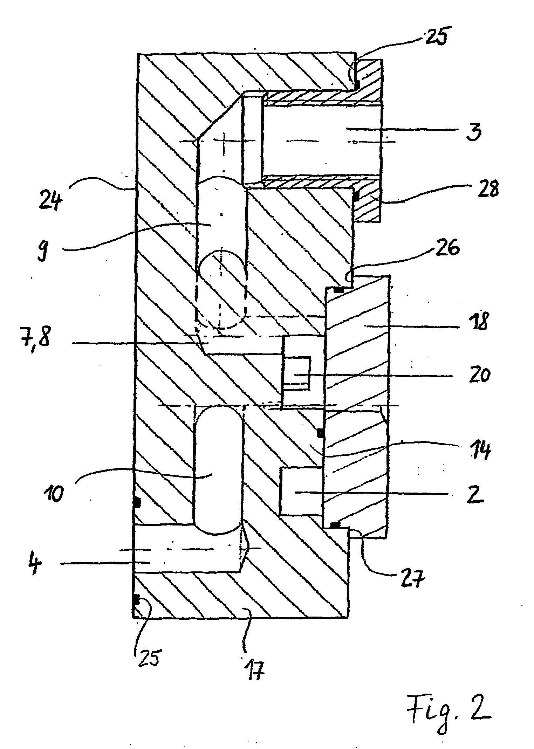

Fig. 2 zeigt eine Schnittdarstellung des erfindungsgemäßen Leckageanzeigers 1 entlang der Linie AA in Figur 1. Der Übersichtlichkeit halber ist der Anzeigekörper nicht abgebildet. Das Basisteil 17 ist vorzugsweise aus einem Metallwerkstoff oder aus einem Kunststoff gefertigt. Die Rundöffnung 11 ebenso wie die besondere Ausgestaltung des Strömungskanals 2 mit dem Trennelement 14 und den Ein- und Auslassöffnungen 7, 8 sowie die Verbindungskanäle 9, 10 sind in das Basisteil 17 durch herkömmliche Bearbeitungsverfahren, beispielsweise Fräsen, eingebracht.

Die Druckmittelableitung 4 ist derart ausgestaltet, dass sie direkt am Druckmittelanschluss des Filterelements, beispielsweise einer Filterplatte (nicht abgebildet), angeschlossen werden kann. Hierfür ist die Rückseite 24 des Leckageanzeigers 1 entsprechend eben ausgebildet. Druckmittelzuleitung 3 und -ableitung 4 sind mit Dichtungselemente 25, beispielsweise Dichtungsringen, abgedichtet, wobei in die Druckmittelzuleitung 3 ein spezieller Anschlussstutzen 28 eingebracht ist, der entsprechend der in diesem Fall verwendete Dimensionierung des Druckmittelanschlusses (nicht abgebildet) angepasst ist.

Die transparente Abdeckung 18 weist an ihren den Strömungskanal 2 zugewandten Außenkanten Ausnehmungen 26 auf. Sie stützt sich zum einen auf zu beiden Seiten der Rundöffnung 11 ausgebildeten und in die Ausnehmungen 26 eingreifenden Schultern 27 des Basisteils 17 und zum anderen auf dem Trennelement 14 ab. Die Abdekkung 18 ist gegenüber Schultern 27 und Trennelement 14 ebenfalls mit Dichtungselementen 25 versehen.

### Bezugszeichenliste

- 1: Leckageanzeiger
- 2: Strömungskanal
- 3: Druckmittelzuleitung
- 4: Druckmittelableitung
- 5: Endseitiger Abschnitt
- 6: Endseitiger Abschnitt
- 7: Einlassöffnung
- 8: Auslassöffnung
- 9: Verbindungskanal
- 10: Verbindungskanal
- 11: Rundöffnung
- 12: Mittelteil
- 13: Stirnfläche
- 14: Trennelement
- 15: Rand
- 16: Verbindungssteg
- 17: Basisteil
- 18: Abdeckung
- 19: Anzeigekörper
- 20: Sperrelement
- 21: Sperrelement
- 22: Bohrloch
- 23: Schraube
- 24: Rückseite
- 25: Dichtungsring
- 26: Ausnehmung
- 27: Schulter
- 28: Anschlussstutzen

## Patentansprüche

1. Leckageanzeiger (1) für ein Filterelement einer Filterpresse, bei der das Filterelement mit wenigstens einer durch ein Druckmittel beaufschlagbaren Membran versehen ist, mit einem in einem Strömungsraum (2) frei bewegbar angeordneten Anzeigekörper (19), dessen von dem zu- oder abströmenden Druckmittel verursachte Lageänderung visuell oder durch Sensoren überwacht werden kann,
**dadurch gekennzeichnet,**
**dass** der Strömungsraum (2) endseitige Abschnitte (5, 6) aufweist, deren Querschnitte größer sind als der Querschnitt eines die endseitigen Abschnitte (5, 6) verbindenden Mittelteils (12) des Strömungsraumes (2).

2. Leckanzeiger (1) nach Anspruch 1,
**gekennzeichnet durch**
einen kanalförmigen Strömungsraum (2).

3. Leckageanzeiger (1) nach Anspruch 1 oder 2,
**gekennzeichnet durch**
jeweils eine endseitig im Strömungsraum (2) angeordnete Ein- bzw. Auslassöffnung (7, 8).

4. Leckageanzeiger (1) nach einem der Ansprüche 1 bis 3,
**dadurch gekennzeichnet,**
**dass** der Anzeigekörper (19) derart dimensioniert ist, dass bei einer Positionierung des Anzeigekörpers (19) in einem endseitigen Abschnitt (5, 6) des Strömungsraums (2) ein ausreichend großer Querschnitt für ein ungehindertes Befüllen bzw. Entleeren des Filterelements offen bleibt.

5. Leckageanzeiger (1) nach einem der Ansprüche 1 bis 4,
**dadurch gekennzeichnet,**
**dass** der Strömungsraum (2) bogenförmig ausgebildet ist.

6. Leckageanzeiger (1) nach einem der Ansprüche 1 bis 5,
**dadurch gekennzeichnet,**
**dass** der Strömungsraum (2) derart ausgebildet ist, dass sich der Anzeigekörper (19) ohne eine Strömung des Druckmittels selbsttätig in seine Ruhelage in den Mittelteil (12) des Strömungsraumes (2) bewegt.

7. Leckageanzeiger (1) nach einem der Ansprüche 1 bis 6,
**dadurch gekennzeichnet,**
**dass** der Anzeigekörper (19) derart dimensioniert ist, dass er den Strömungsraum (2) im Bereich seines Mittelteils (12) nahezu vollständig verschließt.

8. Leckageanzeiger (1) nach einem der Ansprüche 1 bis 7,
**gekennzeichnet durch**
einen zylindrischen Anzeigekörper (19).

9. Leckageanzeiger (1) nach einem der Ansprüche 3 bis 8,
**gekennzeichnet durch**
endseitig im Strömungsraum (2) angeordnete Sperrelemente (20, 21), die ein Blockieren der Ein- bzw. Auslassöffnung (7, 8) **durch** den Anzeigekörper (19) verhindern.

10. Leckageanzeiger (1) nach einem der Ansprüche 1 bis 9,
**gekennzeichnet durch**
eine den Strömungsraum (2) nach außen hin abschließende Abdeckung (18), die eine Sichtscheibe aufweist.

11. Leckageanzeiger (1) nach einem der Ansprüche 1 bis 10,
**gekennzeichnet durch**
elektrische Sensoren zur Erfassung der Position und/oder der Lageänderung des Anzeigekörpers (19).

12. Leckageanzeiger (1) nach einem der Ansprüche 1 bis 11,
**gekennzeichnet durch**
Montageelemente (22) zur Anordnung in der Druckmittelzuleitung des Filterelements oder zur direkten Anordnung am Filterelement.

## Claims

1. Leakage indicator (1) for a filter element of a filter press, in which the filter element is provided with at least one membrane which can be impinged by a pressure medium, with an indicator body (19) which is arranged in a freely movable manner in a flow space (2) and the change in position of which caused by the inflowing or outflowing pressure medium can be monitored visually or by sensors, **characterized in that** the flow space (2) has end portions (5, 6), the cross sections of which are greater than the cross section of a central part (12) of the flow space (2) connecting the end portions (5, 6).

2. Leakage indicator (1) according to Claim 1, **characterized by** a channel-shaped flow space (2).

3. Leakage indicator (1) according to Claim 1 or 2, **characterized by** an inlet opening (7) and an outlet opening (8) arranged in the pressure space (2) at its respective ends.

4. Leakage indicator (1) according to one of Claims 1 to 3, **characterized in that** the indicator body (19) is dimensioned in such a way that, when the indicator body (19) is positioned in an end portion (5, 6) of the flow space (2), an adequately large cross section for unhindered filling and emptying of the filter element remains open.

5. Leakage indicator (1) according to one of Claims 1 to 4, **characterized in that** the flow space (2) is arcuately formed.

6. Leakage indicator (1) according to one of Claims 1 to 5, **characterized in that** the flow space (2) is formed in such a way that, without a flow of the pressure medium, the indicator body (19) moves of its own accord into its position of rest in the central part (12) of the flow space (2).

7. Leakage indicator (1) according to one of Claims 1 to 6, **characterized in that** the indicator body (19) is dimensioned in such a way that it closes the flow space (2) almost completely in the region of its central part (12).

8. Leakage indicator (1) according to one of Claims 1 to 7, **characterized by** a cylindrical indicator body (19).

9. Leakage indicator (1) according to one of Claims 3 to 8, **characterized by** shut-off elements (20, 21), which are arranged at the ends in the flow space (2) and prevent blocking of the inlet and outlet openings (7, 8) by the indicator body (19).

10. Leakage indicator (1) according to one of Claims 1 to 9, **characterized by** a covering (18) which closes off the flow space (2) with respect to the outside and has a viewing plate.

11. Leakage indicator (1) according to one of Claims 1 to 10, **characterized by** electrical sensors for registering the position and/or the change in position of the indicator body (19).

12. Leakage indicator (1) according to one of Claims 1 to 11, **characterized by** mounting elements (22) for arrangement in the pressure medium supply line of the filter element or for direct arrangement on the filter element.

## Revendications

1. Indicateur de fuite (1) pour un élément de filtre d'une presse à filtre, dans laquelle l'élément de filtre est pourvu d'au moins une membrane susceptible d'être sollicitée par un fluide sous pression, comportant un corps indicateur (19) agencé librement mobile dans un espace d'écoulement (2) et dont le changement de position causé par le fluide sous pression qui entre ou qui sort peut être surveillé visuellement ou par capteurs, **caractérisé en ce que** l'espace d'écoulement (2) présente des tronçons d'extrémité (5, 6) dont les sections transversales sont plus grandes que la section transversale d'une partie médiane (12), reliant les tronçons d'extrémité (5, 6), de l'espace d'écoulement (2).

2. Indicateur de fuite (1) selon la revendication 1, **caractérisé par** un espace d'écoulement (2) en forme de canal.

3. Indicateur de fuite (1) selon la revendication 1 ou 2, **caractérisé par** un orifice d'admission ou de sortie (7, 8) agencé à une extrémité respective dans l'espace d'écoulement (2).

4. Indicateur de fuite (1) selon l'une des revendications 1 à 3, **caractérisé en ce que** le corps indicateur (19) a des dimensions telles qu'en cas de positionnement du corps indicateur (19) dans un tronçon d'extrémité (5, 6) de l'espace d'écoulement (2), une section transversale suffisamment grande reste ouverte pour un remplissage ou une vidange sans entrave de l'élément de filtre.

5. Indicateur de fuite (1) selon l'une des revendications 1 à 4, **caractérisé en ce que** l'espace d'écoulement (2) est réalisé de forme arquée.

6. Indicateur de fuite (1) selon l'une des revendications 1 à 5, **caractérisé en ce que** l'espace d'écoulement (2) est réalisé de telle sorte que le corps indicateur (19) se déplace, sans écoulement du fluide sous pression, automatiquement jusque dans sa position de repos dans la partie médiane (12) de l'espace d'écoulement (2).

7. Indicateur de fuite (1) selon l'une des revendications 1 à 6, **caractérisé en ce que** le corps indicateur (19) a des dimensions telles qu'il ferme presque totalement l'espace d'écoulement (2) dans la zone de sa partie médiane (12).

8. Indicateur de fuite (1) selon l'une des revendications 1 à 7, **caractérisé par** un corps indicateur (19) cylindrique.

9. Indicateur de fuite (1) selon l'une des revendications 3 à 8, **caractérisé par** des éléments de blocage (20, 21) agencés côté extrémité dans l'espace d'écoulement (2), lesquels empêchent un blocage de l'orifice d'admission ou de sortie (7, 8) par le corps indicateur (19).

10. Indicateur de fuite (1) selon l'une des revendications 1 à 9, **caractérisé par** un couvercle (18) fermant l'espace d'écoulement (2) vers l'extérieur, lequel présente un voyant.

11. Indicateur de fuite (1) selon l'une des revendications 1 à 10, **caractérisé par** des capteurs électriques pour détecter la position et/ou le changement de position du corps indicateur (19).

12. Indicateur de fuite (1) selon l'une des revendications 1 à 11, **caractérisé par** des éléments de montage (22) pour l'agencement dans la conduite d'amenée de fluide sous pression de l'élément de filtre ou pour l'agencement direct sur l'élément de filtre.
